# EUROPEAN PATENT APPLICATION

(11) **EP 4 080 136 A1**
(43) Date of publication of application: **26.10.2022**
(21) Application number: 19956282.8
(22) Date of filing: 17.12.2019
(51) Int. Cl.: F25B 5/02, F25B 6/02, F25B 13/00, F25B 1/00

(54) **REFRIGERATION CYCLE DEVICE**

(71) Applicant: MITSUBISHI ELECTRIC CORPORATION, Chiyoda-ku Tokyo 100-8310 (JP)
(72) Inventor: GYOTOKU, Shunya, Tokyo 100-8310 (JP); ITO, Masahiro, Tokyo 100-8310 (JP)
(74) Representative: Pfenning, Meinig & Partner mbB
(86) International application number: PCT/JP2019/049458
(87) International publication number: WO 2021/124458

(57) **Abstract**

A refrigeration cycle apparatus (100) includes: a compressor (1), a first outdoor heat exchanger (4), and a second outdoor heat exchanger (5) that are connected to a refrigerant expansion mechanism (8) and an indoor heat exchanger (9) and constitute a refrigerant circuit; and a flow path switching mechanism (20) connected to the compressor (1), the first outdoor heat exchanger (4), the second outdoor heat exchanger (5), and the indoor heat exchanger (9) in the refrigerant circuit, and configured to switch a flow direction of refrigerant compressed by the compressor (1) in the refrigerant circuit. The first outdoor heat exchanger (4) and the second outdoor heat exchanger (5) are arranged to allow the refrigerant to flow in parallel in the refrigerant circuit. The refrigeration cycle apparatus (100) further includes a flow rate adjustment mechanism (7) configured to adjust an amount of refrigerant flowing through the second outdoor heat exchanger (5). When switching between a cooling operation and a heating operation, the flow path switching mechanism (20) switches the flow direction of the refrigerant while the flow rate adjustment mechanism (7) temporarily closes a refrigerant flow path to the second outdoor heat exchanger (5).

## Description

### TECHNICAL FIELD

The present disclosure relates to a refrigeration cycle apparatus.

### BACKGROUND ART

Some conventional refrigeration cycle apparatuses such as a multi air conditioner for a building may include multiple outdoor heat exchangers, in order to adjust the amount of heat exchanged between outdoor air and refrigerant and improve the coefficient of performance (COP).

A refrigeration cycle apparatus capable of cooling operation and heating operation has a refrigerant circuit provided with a flow path switching valve. The flow path switching valve switches the refrigerant circuit between a cooling circuit and a heating circuit to thereby enable the refrigeration cycle apparatus to change its operation. The flow path switching valve includes, for example, a pilot electromagnetic valve together with a valve body. In such a flow path switching valve, a high-pressure pressure chamber and a low-pressure pressure chamber of the valve body are connected through the pilot electromagnetic valve to a high-pressure pipe of the outlet side of a compressor and to a low-pressure pipe of the inlet side of the compressor, respectively. For switching the circuit, the pilot electromagnetic valve is actuated to change high-pressure refrigerant filling one of the left and right pressure chambers of the valve body to low-pressure refrigerant, and change low-pressure refrigerant filling the other pressure chamber to high-pressure refrigerant. The differential pressure between the two pressure chambers acts as driving power for switching the valve body, to thereby enable the refrigerant circuit to switch between the cooling circuit and the heating circuit.

### CITATION LIST

### PATENT LITERATURE

### SUMMARY OF INVENTION

### TECHNICAL PROBLEM

A refrigeration cycle apparatus disclosed in WO2017/138108 (PTL 1) has a refrigerant circuit in which multiple outdoor heat exchangers are disposed, and it is required to switch multiple flow path switching valves for switching the refrigeration cycle apparatus between cooling operation and heating operation. When some of the flow path switching valves are switched, a bypass circuit through which refrigerant directly flows from a high-pressure pipe to a low-pressure pipe is formed during switching between cooling operation and heating operation, resulting in a decrease of the differential pressure acting as a motive power source for the flow path switching valve. The decrease of the differential pressure eventually causes flow path switching to stop, and accordingly the operation may not be switched successfully.

The present disclosure is made to illustrate embodiments that solve the problem as described above, and an object of the present disclosure is to provide a refrigeration cycle apparatus having improved switching performance.

### SOLUTION TO PROBLEM

The present disclosure relates to a refrigeration cycle apparatus. The refrigeration cycle apparatus includes: a compressor, a first outdoor heat exchanger, and a second outdoor heat exchanger that are connected to a refrigerant expansion mechanism and an indoor heat exchanger and constitute a refrigerant circuit; and a flow path switching mechanism configured to switch a flow direction of refrigerant compressed by the compressor in the refrigerant circuit. The flow path switching mechanism is connected to the compressor, the first outdoor heat exchanger, the second outdoor heat exchanger, and the indoor heat exchanger in the refrigerant circuit. The first outdoor heat exchanger and the second outdoor heat exchanger are arranged to allow the refrigerant to flow in parallel in the refrigerant circuit. The refrigeration cycle apparatus further includes a flow rate adjustment mechanism configured to adjust an amount of refrigerant flowing through the second outdoor heat exchanger. When switching between a cooling operation and a heating operation, the flow path switching mechanism switches the flow direction of the refrigerant while the flow rate adjustment mechanism temporarily closes a refrigerant flow path to the second outdoor heat exchanger.

### ADVANTAGEOUS EFFECTS OF INVENTION

The refrigeration cycle apparatus of the present disclosure ensures a differential pressure required for the flow path switching mechanism to switch operation between cooling operation and heating operation, for example, to thereby enable operation to be switched smoothly.

### BRIEF DESCRIPTION OF DRAWINGS

Fig. 1 is a refrigerant circuit diagram of a refrigeration cycle apparatus according to Embodiment 1.
Fig. 2 shows a state of a flow path switching valve during cooling operation.
Fig. 3 shows a state of the flow path switching valve during heating operation.
Fig. 4 shows a state of a refrigeration cycle apparatus 100 during low-capacity cooling operation.
Fig. 5 shows a state of refrigeration cycle apparatus 100 during heating operation.
Fig. 6 is a flowchart for illustrating transition from cooling operation to heating operation.
Fig. 7 shows a state where a flow rate adjustment mechanism 7 is closed in step S1 of Fig. 6.
Fig. 8 shows a state where switching of a flow path switching valve 2 and a flow path switching valve 3 is completed in step S7 of Fig. 6.
Fig. 9 is a flowchart showing a procedure of transition from low-capacity cooling operation to heating operation.
Fig. 10 is a flowchart showing a procedure of transition from heating operation to low-capacity cooling operation.
Fig. 11 is a flowchart showing a procedure of transition from cooling operation to low-capacity cooling operation.
Fig. 12 is a flowchart showing a procedure of transition from low-capacity cooling operation to cooling operation.
Fig. 13 is a waveform diagram showing a first control example in the case where the differential pressure is decreased.
Fig. 14 is a waveform diagram showing a control example in the case where the differential pressure is increased.
Fig. 15 is a waveform diagram showing a second control example in the case where the differential pressure is decreased.
Fig. 16 is a flowchart showing a procedure of control for switching flow path switching valves 2, 3 under the condition that closure of flow rate adjustment mechanism 7 and change of the operating frequency of a compressor 1 are combined.
Fig. 17 is a waveform diagram showing a control example in the case where flow path switching valves 2, 3 are switched under the condition that closure of flow rate adjustment mechanism 7 and change of the operating frequency of compressor 1 are combined.
Fig. 18 is a flowchart for illustrating transition from cooling operation to heating operation according to Embodiment 2.
Fig. 19 shows a state where switching of flow path switching valve 3 is completed in step S73 of Fig. 18.
Fig. 20 is a flowchart for illustrating transition from low-capacity cooling operation to heating operation according to Embodiment 2.
Fig. 21 is a flowchart for illustrating transition from heating operation to low-capacity cooling operation according to Embodiment 2.
Fig. 22 is a flowchart for illustrating transition from cooling operation to low-capacity cooling operation according to Embodiment 2.
Fig. 23 is a flowchart for illustrating transition from low-capacity cooling operation to cooling operation.
Fig. 24 is a refrigerant circuit diagram of a refrigeration cycle apparatus according to Embodiment 3.
Fig. 25 shows a state of a flow path switching valve 202 during cooling operation.
Fig. 26 shows a state of flow path switching valve 202 during heating operation.
Fig. 27 shows flow of refrigerant during low-capacity cooling operation in the refrigeration cycle apparatus according to Embodiment 3.
Fig. 28 shows flow of refrigerant during heating operation in the refrigeration cycle apparatus according to Embodiment 3.
Fig. 29 shows flow of refrigerant during low-capacity heating operation in the refrigeration cycle apparatus according to Embodiment 3.

### DESCRIPTION OF EMBODIMENTS

Embodiments of the present invention are described in detail hereinafter with reference to the drawings. In the following, a plurality of embodiments are described, and it is intended originally that features described in connection with respective embodiments are combined appropriately. In the drawings, the same or corresponding parts are denoted by the same reference characters, and a description thereof is not herein repeated.

### Embodiment 1

### <Configuration of Refrigeration Cycle Apparatus 100>

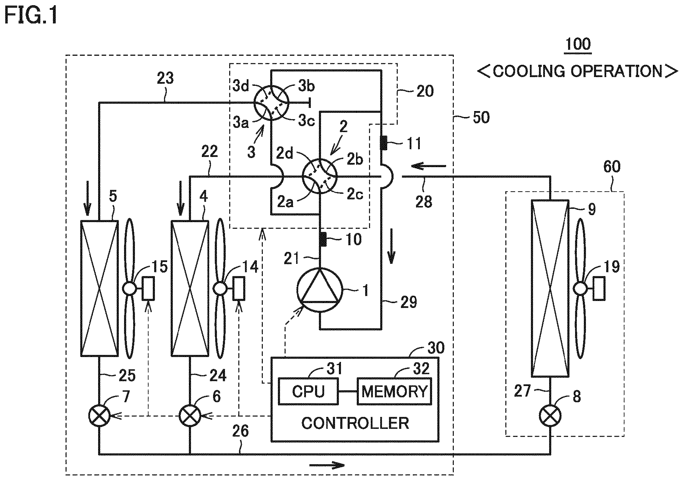

Fig. 1 is a refrigerant circuit diagram of a refrigeration cycle apparatus according to Embodiment 1. Fig. 1 shows a refrigerant circuit and flow of refrigerant during cooling operation. Refrigeration cycle apparatus 100 includes an outdoor unit 50 and an indoor unit 60. Outdoor unit 50 and indoor unit 60 are connected to each other by two pipes 26, 28 that allow refrigerant to flow therethrough.

Outdoor unit 50 includes a compressor 1, a first outdoor heat exchanger 4, a first fan 14, a second outdoor heat exchanger 5, a second fan 15, flow rate adjustment mechanisms 6, 7, a flow path switching mechanism 20, and a controller 30. Indoor unit 60 includes a refrigerant expansion mechanism 8, an indoor heat exchanger 9, and a fan 19.

While the flow path switching mechanism may be configured in various manners, the flow path switching mechanism illustrated in connection with the present embodiment is configured to include flow path switching valves 2, 3. Flow path switching valve 2 is a four-way valve, and flow path switching valve 3 is a three-way valve corresponding to a four-way valve with its one port closed.

The refrigerant circuit of refrigeration cycle apparatus 100 is configured to allow refrigerant discharged from compressor 1 to flow through flow path switching mechanism 20, pipes 22, 23, first outdoor heat exchanger 4, second outdoor heat exchanger 5, pipes 24, 25, flow rate adjustment mechanisms 6, 7, pipe 26, refrigerant expansion mechanism 8, a pipe 27, indoor heat exchanger 9, and pipe 28, and thereafter flow again through flow path switching mechanism 20 to compressor 1.

### <Configuration of Flow Path Switching Valve of Flow Path Switching Mechanism 20>

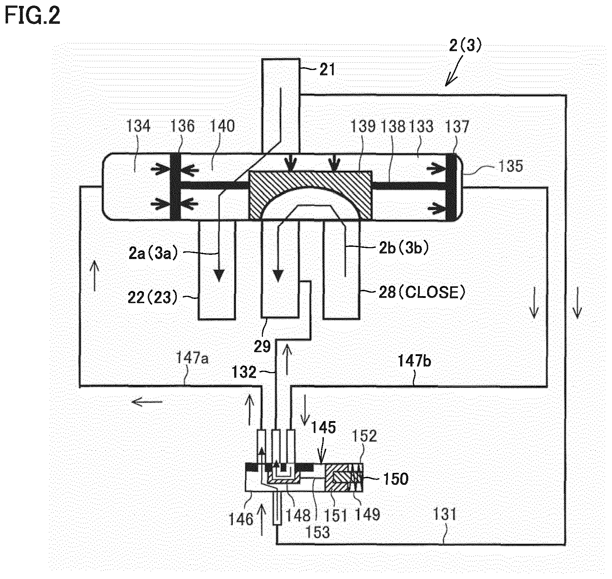

Fig. 2 shows a state of the flow path switching valve during cooling operation. While Fig. 2 illustrates flow path switching valve 2 as an exemplary one, the structure of flow path switching valve 3 is similar to that of flow path switching valve 2. The reference character for each destination to which flow path switching valve 3 is connected is indicated in parentheses.

Flow path switching valve 2 is connected to a pipe 21 connected to a discharge outlet of compressor 1, and is connected to a pipe 29 connected to a suction inlet of compressor 1. While compressor 1 is operating, the pressure of refrigerant flowing through pipe 21 is higher than the pressure of refrigerant flowing through pipe 29. Flow path switching valve 2 is provided with a pressure switching unit 145 for which a pilot electromagnetic valve is used, separately from a valve body. The valve body and pressure switching unit 145 are connected to each other by a high-pressure connection pipe 131, a low-pressure connection pipe 132, a first communication flow path 147a, and a second communication flow path 147b. High-pressure connection pipe 131 is connected to pipe 21 connecting to the inlet side of a flow path 2a of flow path switching valve 2. Low-pressure connection pipe 132 is connected to pipe 29 connecting to the outlet side of a flow path 2b of flow path switching valve 2.

In flow path switching valve 3, high-pressure connection pipe 131 is connected to pipe 21 connecting to the inlet side of flow path 3a of flow path switching valve 3, and low-pressure connection pipe 132 is connected to pipe 29 connecting to the outlet side of flow path 3b of flow path switching valve 3.

Thus, high-pressure refrigerant is introduced into high-pressure connection pipe 131. Low-pressure refrigerant is introduced into low-pressure connection pipe 132.

As shown in Fig. 2, flow path switching valve 2 includes a first pressure chamber 134 and a second pressure chamber 135 that are formed in a first container 133. High-pressure refrigerant is introduced from high-pressure connection pipe 131 into any one of first pressure chamber 134 and second pressure chamber 135, and low-pressure refrigerant is introduced from low-pressure connection pipe 132 into the other. The high-pressure refrigerant and the low-pressure refrigerant introduced into first pressure chamber 134 and second pressure chamber 135 can be exchanged with each other. Flow path switching valve 2 has a first partition 136 disposed in first container 133 for separating first pressure chamber 134, and a second partition 137 disposed in first container 133 for separating second pressure chamber 135. In first container 133, a valve body chamber 140 is formed to extend from first partition 136 to second partition 137. Flow path switching valve 2 has a coupling part 138 that couples, in valve body chamber 140, first partition 136 and second partition 137 to each other. Flow path switching valve 2 has a valve body 139 disposed on coupling part 138.

The distance from first partition 136 to second partition 137 is a fixed length defined by coupling part 138 and valve body 139. The sum of the capacity of first pressure chamber 134 and the capacity of second pressure chamber 135 in first container 133 is therefore constant and, as the capacity of one chamber increases, the capacity of the other chamber decreases complementarily. Valve body 139 is disposed in such a manner that valve body 139 is slidable together with first partition 136 and second partition 137.

In flow path switching valve 2, four pipes 21, 22, 28, and 29 that form flow paths 2a, 2b are connected to valve body chamber 140 in first container 133. Specifically, flow path switching valve 2 has pipe 21 connecting to the inlet side of flow path 2a, pipe 29 connecting to the outlet side of flow path 2b, pipe 28 connecting to the inlet side of flow path 2b, and pipe 22 connecting to the outlet side of flow path 2a.

In flow path switching valve 3, four pipes 21, 22, 28, and 29 forming flow paths 3a, 3b are connected to valve body chamber 140. In flow path switching valve 3, pipe 21 connects to the inlet side of flow path 3a, pipe 29 connects to the outlet side of flow path 3b, pipe 28 connects to the inlet side of flow path 3b, and pipe 22 connects to the outlet side of flow path 3a.

Three pipes 22, 28, and 29 out of four pipes 21, 22, 28, and 29 that are connected to flow path switching valve 2 are arranged side by side within a range in which valve body 139 is slidable. Pipe 29 is disposed between pipe 22 and pipe 28. In flow path switching valve 3, first container 133 is connected to pipe 23 instead of pipe 22 and to a closed pipe instead of pipe 28 within the range in which valve body 139 is slidable.

Valve body 139 in flow path switching valve 2 in Fig. 2 allows pipe 29 connecting to the outlet side of flow path 2b to communicate uninterruptedly, within valve body 139, with pipe 28 connecting to the inlet side of flow path 2b. In flow path switching valve 3, valve body 139 allows pipe 29 connecting to the outlet side of flow path 3b to communicate uninterruptedly, within valve body 139, with pipe 28 connecting to the inlet side of flow path 3b.

On the outside of valve body 139, pipe 21 connects to any one of pipes 22 and 28 through valve body chamber 140. High-pressure refrigerant therefore flows through valve body chamber 140 between first partition 136 and second partition 137 in first container 133. The high-pressure refrigerant flowing through valve body chamber 140 causes valve body 139 to be pressed against the inner wall of first container 133 to prevent the high-pressure refrigerant from flowing into valve body 139 through which low-pressure refrigerant flows.

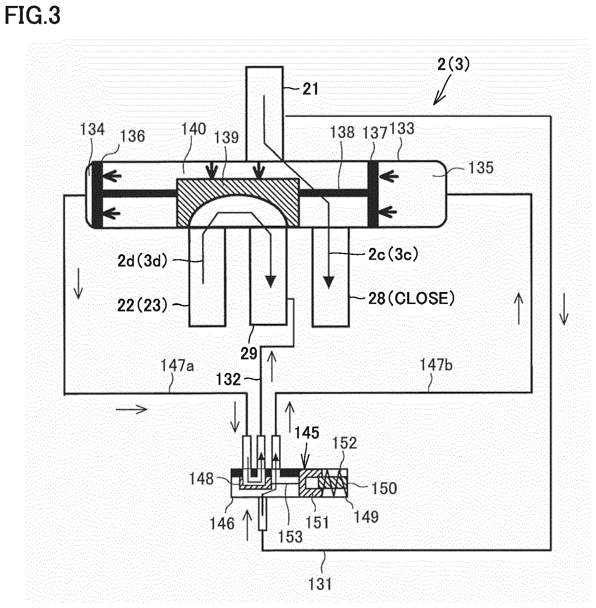

Fig. 3 shows a state of the flow path switching valve during heating operation. In Fig. 3, valve body 139 has been slid from the state shown in Fig. 2 to the state shown in Fig. 3, to form flow paths 2c, 2d in flow path switching valve 2, and form flow paths 3c, 3d in flow path switching valve 3.

In flow path switching valve 2, valve body 139 allows pipe 29 connecting to the outlet side of flow path 2d to communicate uninterruptedly, within valve body 139, with pipe 22 connecting to the inlet side of flow path 2d. In flow path switching valve 3, valve body 139 allows pipe 29 connecting to the outlet side of flow path 3d to communicate uninterruptedly, within valve body 139, with pipe 23 connecting to the inlet side of flow path 3d.

Valve body 139 is configured to be movable within the range in which the valve body is slidable, depending on the differential pressure of refrigerant between first pressure chamber 134 and second pressure chamber 135. Flow path switching valve 2 and flow path switching valve 3 are each switchable between the state shown in Fig. 2 and the state shown in Fig. 3.

In the state shown in Fig. 3, high-pressure refrigerant also flows from pipe 21 into valve body chamber 140 between first partition 136 and second partition 137 in first container 133. The high-pressure refrigerant flowing through valve body chamber 140 causes valve body 139 to be pressed against the inner wall of first container 133 to prevent the high-pressure refrigerant from flowing into valve body 139 through which low-pressure refrigerant flows.

### <Configuration of Pressure Switching Unit 145>

Flow path switching valve 2 has pressure switching unit 145 that switches high-pressure refrigerant and low-pressure refrigerant introduced into high-pressure connection pipe 131 and low-pressure connection pipe 132. Flow path switching valve 3 is also provided with a pressure switching unit similar to and separate from the pressure switching unit used for flow path switching valve 2.

Pressure switching unit 145 has a second container 146 to which high-pressure connection pipe 131 and low-pressure connection pipe 132 are connected. Pressure switching unit 145 has a second valve body 148. Second valve body 148 is disposed in second container 146 and configured to slide. In a range in which second valve body 148 is slidable, the inside of second valve body 148 communicates uninterruptedly with a connecting part of low-pressure connection pipe 132 all the time. Any one of a connecting part of first communication flow path 147a communicating with first pressure chamber 134 and a connecting part of second communication flow path 147b communicating with second pressure chamber 135 communicates uninterruptedly with the inside of second valve body 148.

Pressure switching unit 145 has a drive unit 149 that causes second valve body 148 to slide. Drive unit 149 is made up of an electromagnet 150, a plunger 151 attracted to energized electromagnet 150, and a spring 152 exerting a force in the direction opposite to the direction in which plunger 151 is attracted. A coupling rod 153 is disposed between second valve body 148 and plunger 151. Electromagnet 150 causes plunger 151 to be attracted toward electromagnet 150 by the electric power supplied to electromagnet 150. Second valve body 148 is moved together with plunger 151. Spring 152 is disposed around electromagnet 150 in a rod shape. Spring 152 is disposed to cause second valve body 148 and plunger 151 to be moved away from electromagnet 150 by an elastic force.

First communication flow path 147a communicating with first pressure chamber 134 and second communication flow path 147b communicating with second pressure chamber 135 are connected to pressure switching unit 145.

In the state shown in Fig. 2, controller 30 causes electric power to be supplied to electromagnet 150 of pressure switching unit 145. In this case, second valve body 148 is attracted toward electromagnet 150 against a repulsive force of spring 152. Accordingly, the connecting part of low-pressure connection pipe 132 communicates uninterruptedly, within second valve body 148, with the connecting part of second communication flow path 147b communicating with second pressure chamber 135. At this time, a connecting part of high-pressure connection pipe 131 communicates uninterruptedly, on the outside of second valve body 148, with the connecting part of first communication flow path 147a communicating with first pressure chamber 134.

In contrast, in the state shown in Fig. 3, controller 130 does not cause electric power to be supplied to electromagnet 150 of pressure switching unit 145. In this case, second valve body 148 is moved away from electromagnet 150 by a repulsive force of spring 152. Accordingly, the connecting part of low-pressure connection pipe 132 communicates uninterruptedly, within second valve body 148, with the connecting part of first communication flow path 147a communicating with first pressure chamber 134. At this time, the connecting part of high-pressure connection pipe 131 communicates uninterruptedly, on the outside of second valve body 148, with the connecting part of second communication flow path 147b communicating with second pressure chamber 135.

In both of the two states shown in Figs. 2 and 3, high-pressure refrigerant flows through second container 146 of pressure switching unit 145 and flows through the outside of second valve body 148 to cause second valve body 148 to be pressed against the inner wall of second container 146 to thereby prevent the high-pressure refrigerant from flowing into second valve body 148 through which low-pressure refrigerant flows.

### <Cooling Operation>

During cooling operation, as shown in Figs. 1 and 2, flow path switching valve 2 and flow path switching valve 3 allow the discharge side of compressor 1 to communicate with first outdoor heat exchanger 4 and second outdoor heat exchanger 5. Specifically, flow path 2a and flow path 2b of flow path switching valve 2 as well as flow path 3a and flow path 3b of flow path switching valve 3 are set into a communicating state. Moreover, flow paths 2c and 2d of flow path switching valve 2 and flow paths 3c and 3d of flow path switching valve 3 are set into a closed state.

Vapor refrigerant of high temperature and high pressure generated by compressor 1 flows through flow path switching valve 2 and flow path switching valve 3 into first outdoor heat exchanger 4 and second outdoor heat exchanger 5, respectively. At this time, first outdoor heat exchanger 4 and second outdoor heat exchanger 5 each function as a condenser. The vapor refrigerant of high temperature and high pressure releases heat into outdoor air having a lower temperature than the refrigerant and is accordingly condensed into liquid refrigerant of high pressure. While the liquid refrigerant of high pressure flows through flow rate adjustment mechanisms 6, 7, the flow rate is adjusted. The liquid refrigerant of high pressure is thereafter expanded by refrigerant expansion mechanism 8 into gas-liquid two-phase refrigerant of low temperature and low pressure that flows into indoor heat exchanger 9. At this time, indoor heat exchanger 9 functions as an evaporator. The gas-liquid two-phase refrigerant of low pressure and low temperature absorbs heat from indoor air having a higher temperature than the refrigerant, and is accordingly evaporated into vapor refrigerant of low pressure. The vapor refrigerant of low pressure thereafter flows again through flow path switching valve 2 and is sucked into compressor 1. After this, the refrigerant circulates in a refrigeration cycle in a similar process.

In order to improve the operational efficiency of cooling operation when the outdoor temperature is lower than the indoor temperature (for example, outdoor air temperature is 7°C and indoor air temperature is 25°C), the capacity of the outdoor unit may be reduced to perform cooling operation. Such cooling operation is hereinafter referred to as low-capacity cooling operation.

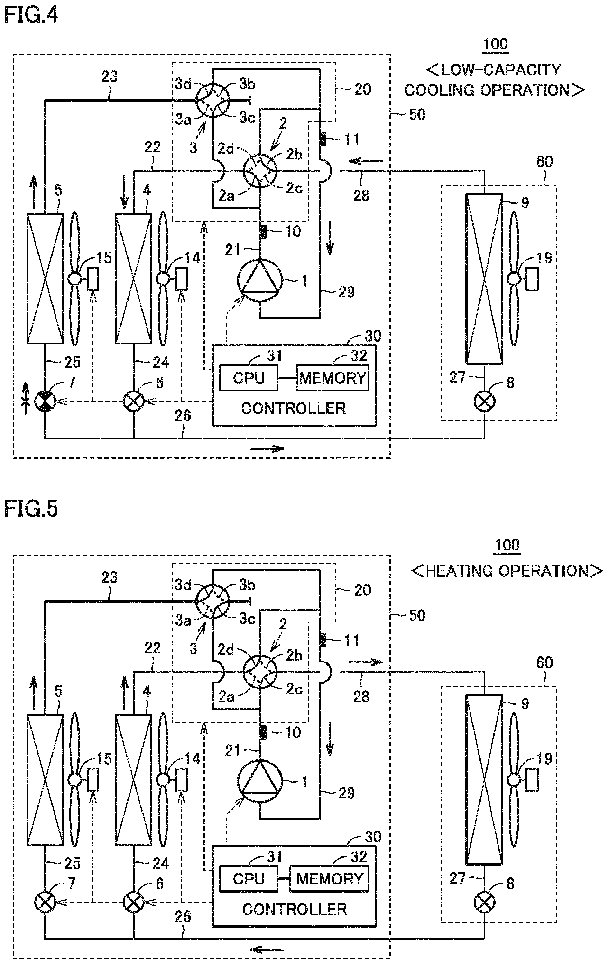

Fig. 4 shows a state of refrigeration cycle apparatus 100 during low-capacity cooling operation. As shown in Fig. 4, flow path switching valve 2 allows the discharge side of compressor 1 to communicate with first outdoor heat exchanger 4, and flow path switching valve 3 allows the suction side of the compressor to communicate with second outdoor heat exchanger 5. Specifically, flow path 2a and flow path 2b of flow path switching valve 2 as well as flow path 3c and flow path 3d of flow path switching valve 3 are opened. Moreover, flow path 2c and flow path 2d of flow path switching valve 2 as well as flow path 3a and flow path 3b of flow path switching valve 3 are closed. Flow rate adjustment mechanism 7 is thereafter closed and, during low-capacity cooling operation, no refrigerant flows into second outdoor heat exchanger 5. Accordingly, the heat exchange capacity of second outdoor heat exchanger 5 is reduced.

### <Heating Operation>

Fig. 5 shows a state of refrigeration cycle apparatus 100 during heating operation.

During heating operation, as shown in Fig. 5, flow path switching valve 2 and flow path switching valve 3 allow the discharge side of compressor 1 to communicate with indoor heat exchanger 9. Specifically, during heating operation, flow path 2c and flow path 3c as well as flow path 2d and flow path 3d of flow path switching valve 2 and flow path switching valve 3 are opened. Moreover, flow path 2a and flow path 3a as well as flow path 2b and flow path 3b of flow path switching valve 2 and flow path switching valve 3 are closed.

Vapor refrigerant of high temperature and high pressure generated by compressor 1 flows through flow path switching valve 2 into indoor heat exchanger 9. At this time, indoor heat exchanger 9 functions as a condenser. The vapor refrigerant of high temperature and high pressure releases heat into indoor air having a lower temperature than the refrigerant and is accordingly condensed into liquid refrigerant of high pressure. While the liquid refrigerant of high pressure flows through refrigerant expansion mechanism 8, the liquid refrigerant of high pressure is expanded into gas-liquid two-phase refrigerant of low temperature and low pressure. The gas-liquid two-phase refrigerant of low temperature and low pressure flows through flow rate adjustment mechanisms 6, 7 and thereafter flows into first outdoor heat exchanger 4 and second outdoor heat exchanger 5. At this time, first outdoor heat exchanger 4 and second outdoor heat exchanger 5 each function as an evaporator. The gas-liquid two-phase refrigerant of low pressure and low temperature absorbs heat from outdoor air having a higher temperature than the refrigerant, and is accordingly evaporated into vapor refrigerant of low pressure. The vapor refrigerant of low pressure thereafter flows through flow path switching valve 2 and flow path switching valve 3, and is sucked into compressor 1. After this, the refrigerant circulates in a refrigeration cycle in a similar process.

### <Transition between Cooling Operation and Heating Operation>

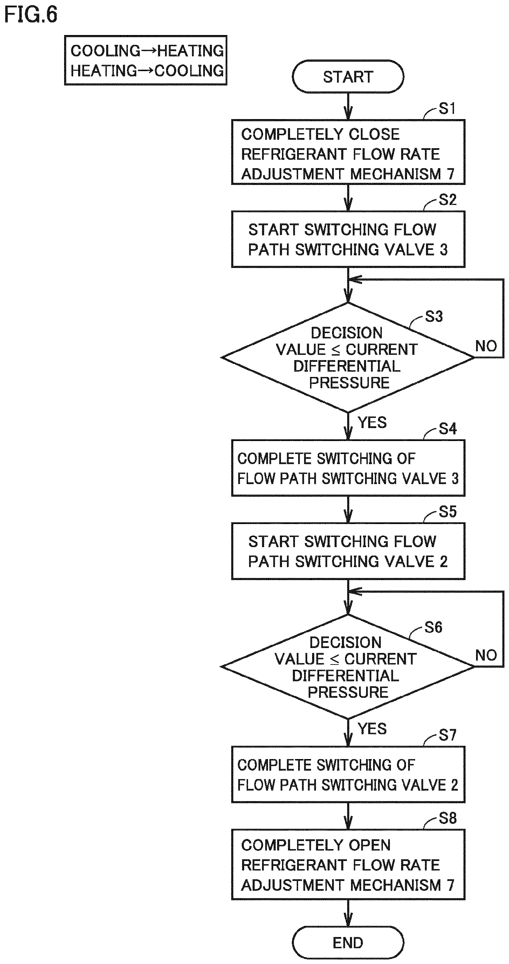

Fig. 6 is a flowchart for illustrating transition from cooling operation to heating operation. Transition from heating operation to cooling operation is controlled similarly as shown in Fig. 6.

When flow path switching valve 3 is switched prior to switching of flow path switching valve 2 during cooling operation shown in Fig. 1, a circuit is formed through which gas discharged from compressor 1 flows successively through flow path switching valve 2, first outdoor heat exchanger 4, flow rate adjustment mechanisms 6, 7, second outdoor heat exchanger 5, and flow path switching valve 3, to the suction side of compressor 1, and thus the circuit forms a bypass between the high pressure part and the low pressure part without reduction of the pressure by the expansion mechanism. Due to this circuit, the differential pressure between the discharge side and the suction side of compressor 1 required for switching flow path switching valves 2, 3 is reduced, and accordingly the driving power for switching is reduced.

In order to interrupt this closed circuit, controller 30 first closes flow rate adjustment mechanism 7 as shown in step S1 of Fig. 6.

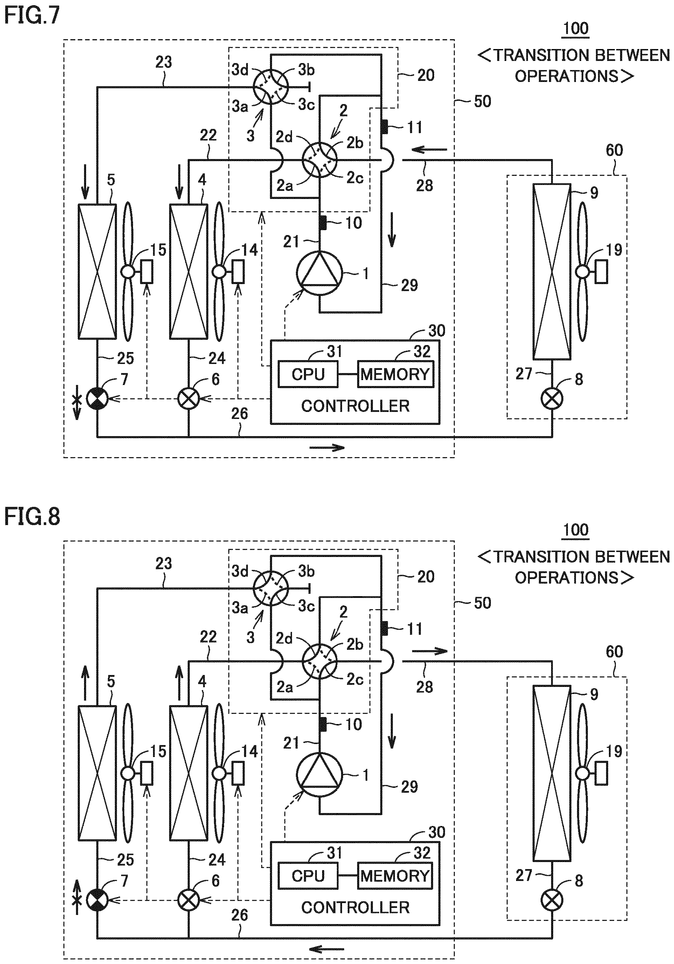

Fig. 7 shows a state where flow rate adjustment mechanism 7 is closed in step S1 of Fig. 6. In Fig. 7, as flow rate adjustment mechanism 7 is closed, refrigerant that was flowing through second outdoor heat exchanger 5 is interrupted.

Subsequently, in step S2 of Fig. 6, controller 30 starts switching flow path switching valve 3. In flow path switching valve 3, valve body 139 is moved from the state shown in Fig. 2 toward the state shown in Fig. 3. In this process, a path that forms a bypass between pipe 21 and pipe 29 within flow path switching valve 3 is formed temporarily. For example, when valve body 139 is moved slightly from the state in Fig. 2 toward first pressure chamber 134, a connection port of pipe 28 communicates with valve body chamber 140 while the connection port is not completely closed by valve body 139. Then, a bypass path is formed in which refrigerant flows successively through pipe 21, valve body chamber 140, the inlet of pipe 28, the inside of valve body 139, and pipe 29. During movement of valve body 139, the differential pressure is therefore reduced to some extent. It is noted that the closure of flow rate adjustment mechanism 7 ensures that the differential pressure is reduced only slightly and, as valve body 139 is moved completely and switching of flow path switching valve 3 is completed, the reduced differential pressure regains its original differential pressure.

In step S3, controller 30 monitors the differential pressure based on the difference between respective values detected by pressure sensors 10 and 11.

Controller 30 checks, in step S3, whether or not switching of the flow path switching valve has been completed or not, by using pressure sensor 10 for the high pressure part and pressure sensor 11 for the low pressure part in Fig. 1. When the differential pressure is lower than a decision value due to the temporary internal bypass formed in the flow path switching valve, controller 30 determines that the switching has not been completed. In contrast, when the differential pressure is more than or equal to the decision value, controller 30 determines that the switching has been completed (step S4).

Controller 30 thereafter starts switching flow path switching valve 2 in step S5, similarly monitors the differential pressure in step S6, and determines that the switching of flow path switching valve 2 is completed when the current differential pressure is more than or equal to the decision value (step S7).

Fig. 8 shows a state where switching of flow path switching valve 2 and flow path switching valve 3 has been completed in step S7 of Fig. 6.

When switching of flow path switching valve 2 and flow path switching valve 3 has been completed as shown in Fig. 8, finally flow rate adjustment mechanism 7 is opened in step S8 to make a transition to heating operation shown in Fig. 5. Thus, switching can be made in the order of the operations shown in Fig. 6 to transition from cooling operation to heating operation while ensuring the differential pressure acting as driving power for switching flow path switching valves 2, 3.

In Fig. 6, flow path switching valve 3 is switched first, and flow path switching valve 2 is thereafter switched. The order of switching, however, may be reversed. Specifically, flow path switching valve 2 may be switched first, and flow path switching valve 3 may thereafter be switched.

For transition from heating operation to cooling operation as well, the switching is made in the order of the operations shown in Fig. 6.

### <Transition between Low-Capacity Cooling Operation and Heating Operation>

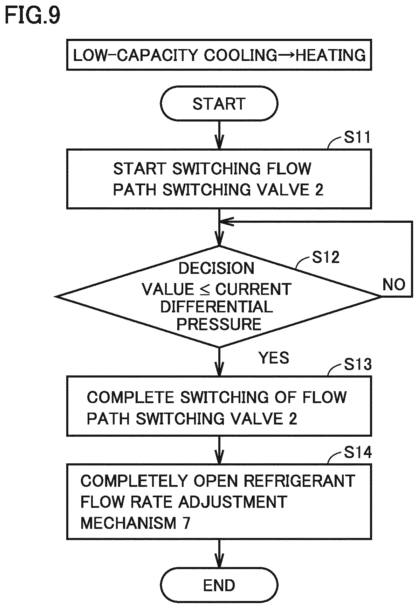

Fig. 9 is a flowchart showing a procedure of transition from low-capacity cooling operation to heating operation. During the low-capacity cooling operation shown in Fig. 4, switching of flow path switching valve 2 is started in step S11. Step S12 waits until the current differential pressure becomes more than or equal to a decision value, and the switching of flow path switching valve 2 is completed in step S13. The state at this time is the one as shown in Fig. 8.

After the switching of flow path switching valve 2 is completed, finally flow rate adjustment mechanism 7 is opened to make a transition to the heating operation shown in Fig. 5.

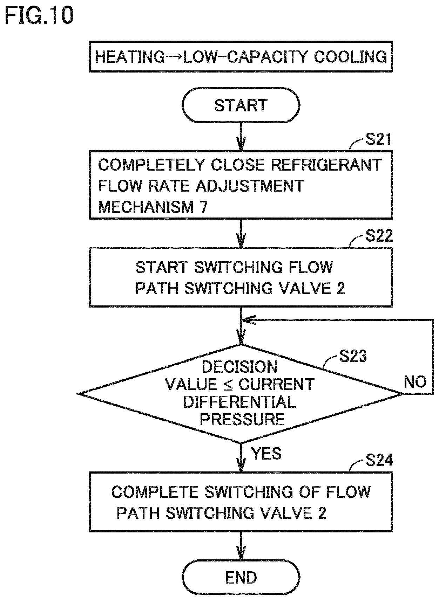

Fig. 10 is a flowchart showing a procedure of transition from heating operation to low-capacity cooling operation. In the state where the heating operation shown in Fig. 5 is being performed, flow rate adjustment mechanism 7 is completely closed in step S21. The state at this time is the one as shown in Fig. 8. Switching of flow path switching valve 2 is started in step S22, and step S23 waits until the current differential pressure becomes more than or equal to a decision value. When the switching of flow path switching valve 2 is completed in step S24, a transition is made to the low-capacity cooling operation shown in Fig. 4.

### <Transition between Cooling Operation and Low-Capacity Cooling Operation>

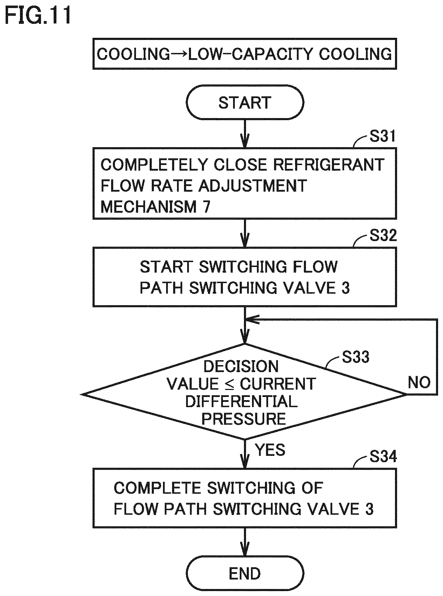

Fig. 11 is a flowchart showing a procedure of transition from cooling operation to low-capacity cooling operation. In the state where the cooling operation shown in Fig. 1 is being performed, flow rate adjustment mechanism 7 is completely closed in step S31. The state at this time is the one as shown in Fig. 7. Switching of flow path switching valve 3 is started in step S32, and step S33 waits until the current differential pressure becomes more than or equal to a decision value. When the switching of flow path switching valve 3 is completed in step S34, a transition is made to the low-capacity cooling operation shown in Fig. 4.

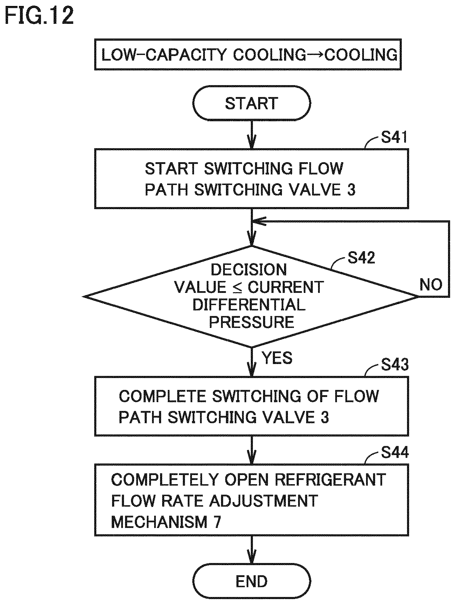

Fig. 12 is a flowchart showing a procedure of transition from low-capacity cooling operation to cooling operation. During the low-capacity cooling operation shown in Fig. 4, switching of flow path switching valve 3 is started in step S41, and step S42 waits until the current differential pressure becomes more than or equal to a decision value. When the switching of flow path switching valve 3 is completed in step S43, the state shown in Fig. 7 is reached.

After the switching of flow path switching valve 3 is completed, finally flow rate adjustment mechanism 7 is opened in step S44, and a transition is made to the cooling operation shown in Fig. 1.

### <Valve Switching Using Compressor and Flow Rate Adjustment Mechanism in Combination>

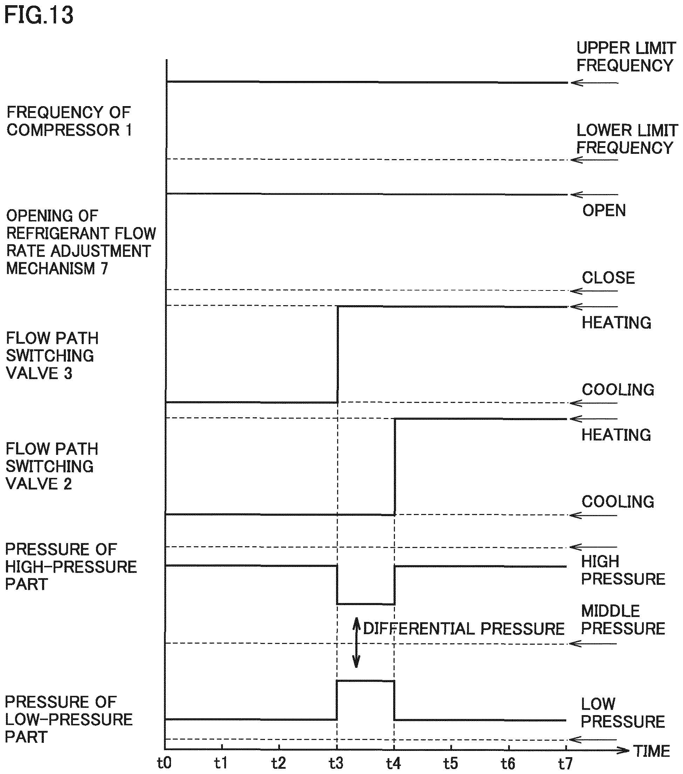

While the flow path switching valve requires a certain differential pressure for switching, an excessively increased differential pressure can damage coupling part 138 or valve body 139 due to a sudden pressure variation occurring within the flow path switching valve. Moreover, if the pressure of the high pressure part increases or the pressure of the low pressure part decreases excessively during switching control, control may be started for protecting the refrigerant circuit. These problems are described below in connection with Figs. 13, 14, and 15.

Fig. 13 is a waveform diagram showing a first control example in the case where the differential pressure is decreased. As shown in Fig. 13, when flow path switching valves 2, 3 are switched under the conditions that the operating frequency of compressor 1 is set to and maintained at a maximum frequency and flow rate adjustment mechanism 7 is opened, flow path switching valve 2 is switched under the condition that the differential pressure is kept decreased from time t3 to time t4 after switching of flow path switching valve 3, and therefore, the switching may be stopped before completed.

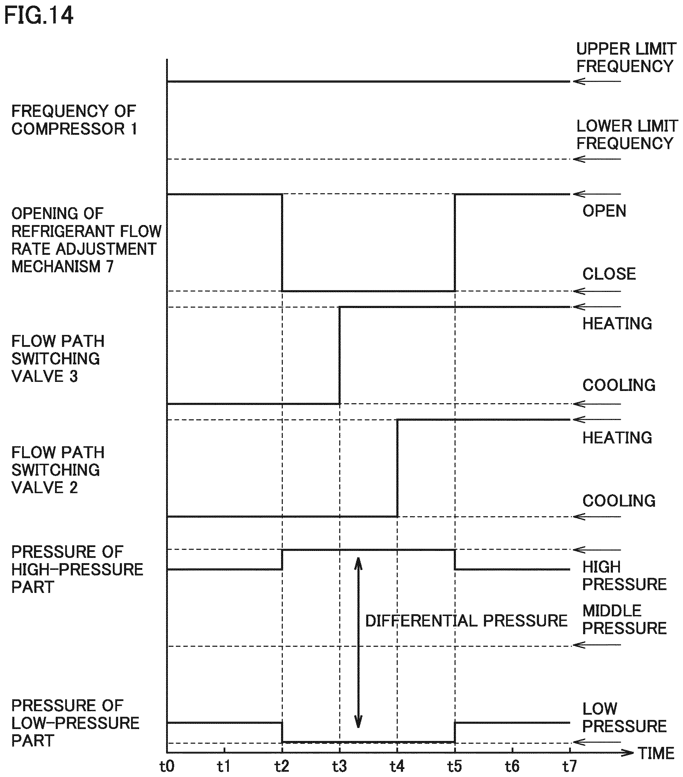

Fig. 14 is a waveform diagram showing a control example in the case where the differential pressure is increased. As shown in Fig. 14, when flow path switching valves 2, 3 are switched under the conditions that the operating frequency of compressor 1 is set to and maintained at a maximum frequency and flow rate adjustment mechanism 7 is closed, the differential pressure has been increased from time t2 to time t5. If flow path switching valves 2, 3 are switched at this time, the differential pressure is excessively large relative to the pressure required for switching, which may lead to damage within flow path switching valves 2, 3. In order to prevent the differential pressure from increasing excessively, the operational frequency of compressor 1 may be reduced.

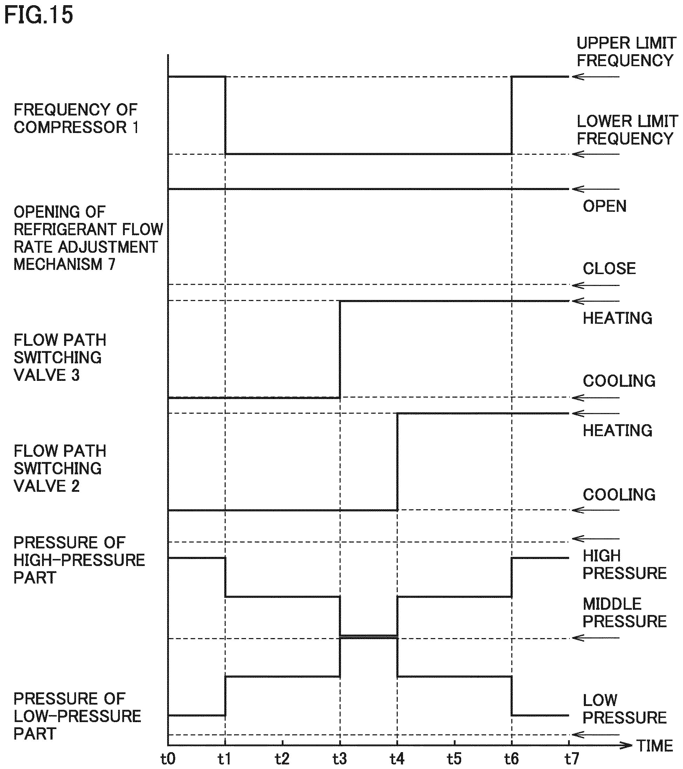

Fig. 15 is a waveform diagram showing a second control example in the case where the differential pressure is decreased. As shown in Fig. 15, when flow path switching valves 2, 3 are switched under the conditions that the operating frequency of compressor 1 is set to and maintained at a minimum frequency and flow rate adjustment mechanism 7 is opened, flow path switching valve 2 is switched under the condition that the differential pressure has been decreased from time t3 to time t4 after switching of flow path switching valve 3, and therefore, the switching may be stopped before completed.

In order to prevent them, preferably the flow path switching valve is switched under the conditions that flow rate adjustment mechanism 7 is closed and compressor 1 is operated at the minimum pressure to set the differential pressure at an appropriate pressure.

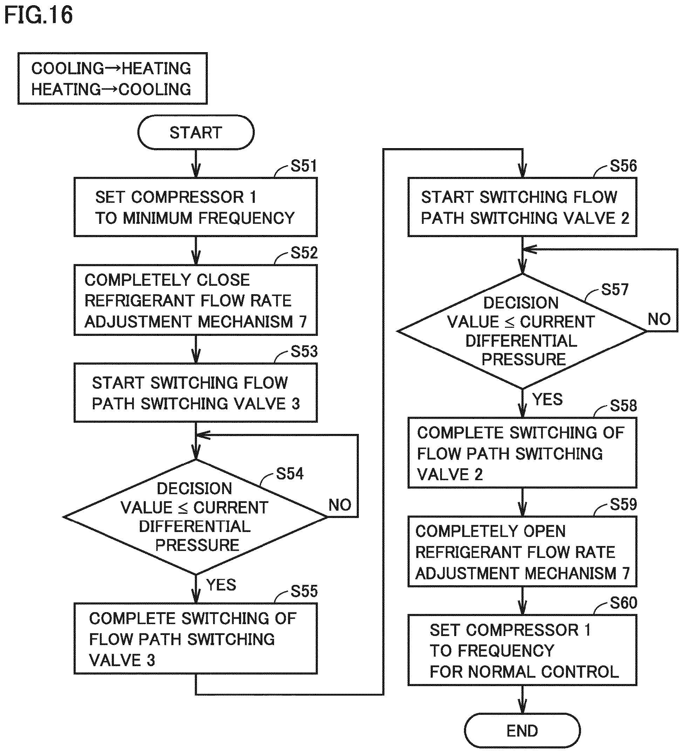

Fig. 16 is a flowchart showing a procedure of control for switching flow path switching valves 2, 3 under the condition that closure of flow rate adjustment mechanism 7 and change of the operating frequency of compressor 1 are combined.

In step S51 of Fig. 16, initially the operating frequency of compressor 1 is set to a minimum frequency. The minimum frequency is the lower limit to which the operating frequency can be set for compressor 1 to operate. Subsequently, as shown in step S52, controller 30 closes flow rate adjustment mechanism 7. Further in step S53, controller 30 starts switching flow path switching valve 3.

In step S54, controller 30 monitors the differential pressure based on the difference between respective values detected by pressure sensors 10 and 11.

When the differential pressure is lower than a decision value due to a temporary internal bypass formed in the flow path switching valve, controller 30 determines that switching has not been completed. In contrast, when the differential pressure is more than or equal to the decision value, controller 30 determines that switching has been completed (step S55).

Controller 30 thereafter starts switching flow path switching valve 2 in step S56, similarly monitors the differential pressure in step S57 and, when the current differential pressure is more than or equal to the decision value, controller 30 determines that switching of flow path switching valve 2 has been completed (step S58).

When switching of flow path switching valve 2 and flow path switching valve 3 has been completed, flow rate adjustment mechanism 7 is opened in step S59. Finally, in step S60, the operating frequency of compressor 1 having been decreased is set back to the frequency for normal control.

Thus, switching can be made in the order of operations shown in Fig. 16 to transition from cooling operation to heating operation while the differential pressure acting as driving power for switching flow path switching valves 2, 3 is set to an appropriate pressure.

In Fig. 16, flow path switching valve 3 is switched first, and flow path switching valve 2 is thereafter switched. The order of switching, however, may be reversed. Specifically, flow path switching valve 2 may be switched first, and flow path switching valve 3 may thereafter be switched.

For transition from heating operation to cooling operation as well, the switching can be made in the order of the operations shown in Fig. 16.

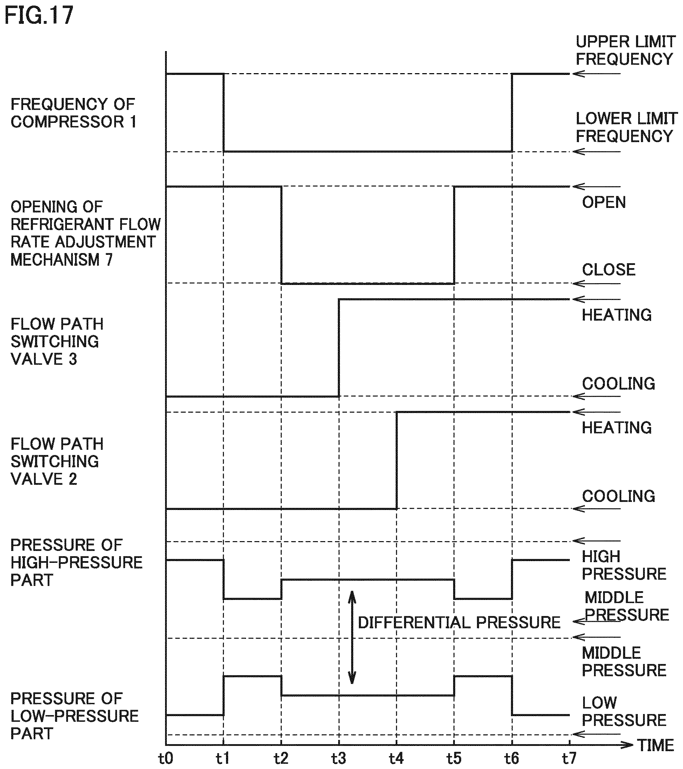

Fig. 17 is a waveform diagram showing a control example in the case where flow path switching valves 2, 3 are switched under the condition that closure of flow rate adjustment mechanism 7 and change of the operating frequency are combined.

As shown in Fig. 17, the operating frequency of compressor 1 is kept at the minimum frequency from time t1 to time t6 and flow rate adjustment mechanism 7 is kept closed from time t2 to time t5, to thereby adjust the differential pressure from time t2 to time t5 to an appropriate differential pressure. Flow path switching valves 2, 3 can therefore be switched under appropriate conditions without causing excessive differential pressure that may lead to failure and without deficiency of the differential pressure.

### Embodiment 2

For Embodiment 2, the description of features identical to those of Embodiment 1 is not repeated and only distinguishing features of Embodiment 2 are described. According to Embodiment 2, when cooling operation is switched to heating operation, the frequency of compressor 1 is adjusted with flow rate adjustment mechanism 7 kept open to thereby maintain an appropriate differential pressure, and the flow path switching valves are switched.

### <Transition between Cooling Operation and Heating Operation>

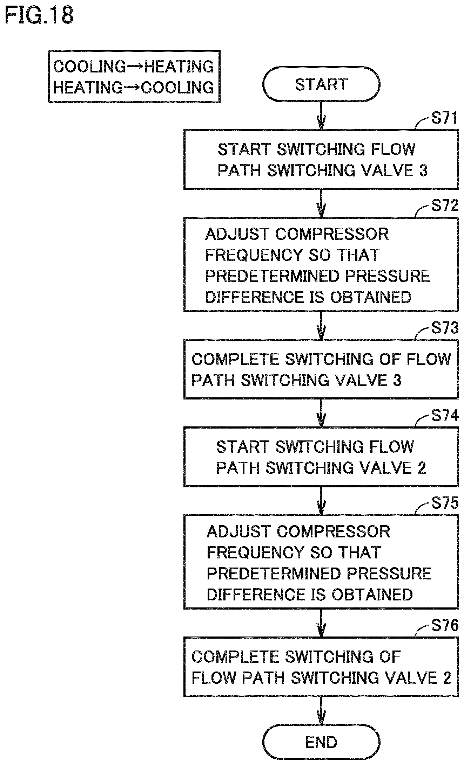

Fig. 18 is a flowchart for illustrating transition from cooling operation to heating operation according to Embodiment 2. In step S71, initially controller 30 starts switching flow path switching valve 3. Because the differential pressure is decreased during switching, controller 30 adjusts the frequency of compressor 1 so that an appropriate differential pressure required for switching is obtained in step S72. In step S73, the switching of flow path switching valve 3 is completed.

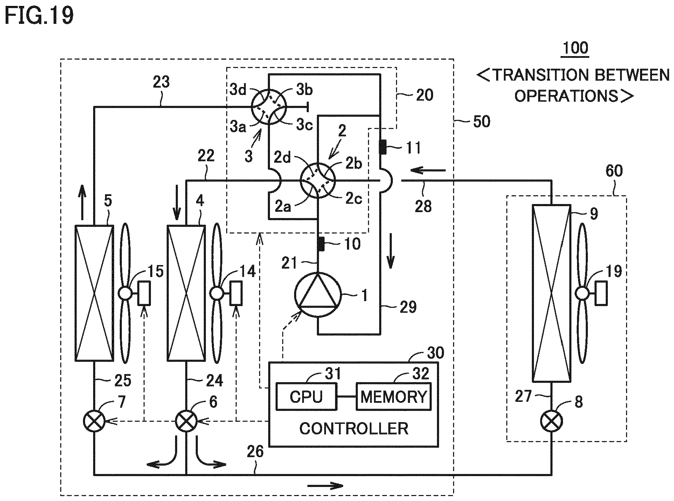

Fig. 19 shows a state where the switching of flow path switching valve 3 is completed in step S73 of Fig. 18. In Fig. 19, flow path switching valve 3 is switched to form a bypass path through which a part of refrigerant flowing through and leaving first outdoor heat exchanger 4 flows through second outdoor heat exchanger 5 and returns to compressor 1. A decrease of the differential pressure at this time is compensated for by the operating frequency of compressor 1 that has been increased in advance, and therefore, a differential pressure required for subsequently switching flow path switching valve 2 is ensured.

After the switching of flow path switching valve 3 is completed, controller 30 subsequently starts switching flow path switching valve 2 in step S74. In step S75, the frequency of compressor 1 is adjusted so that an appropriate differential pressure required for switching is obtained, and therefore, flow path switching valve 2 is switched successfully without problems in step S76.

Transition from heating operation to cooling operation can made in a similar manner to the one shown in Fig. 18.

### <Transition between Cooling Operation and Low-Capacity Cooling Operation>

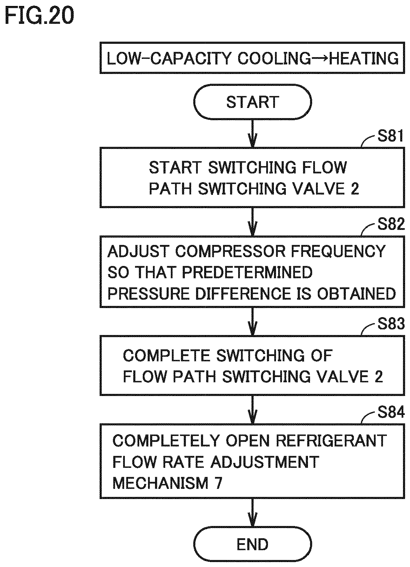

Fig. 20 is a flowchart for illustrating transition from low-capacity cooling operation to heating operation according to Embodiment 2. In step S81, controller 30 starts switching flow path switching valve 2. In step S82, controller 30 adjusts the frequency of compressor 1 so that an appropriate differential pressure required for switching is obtained, and switches flow path switching valve 2 into the state shown in Fig. 8. After the switching is completed in step S83, controller 30 opens flow rate adjustment mechanism 7 in step S84.

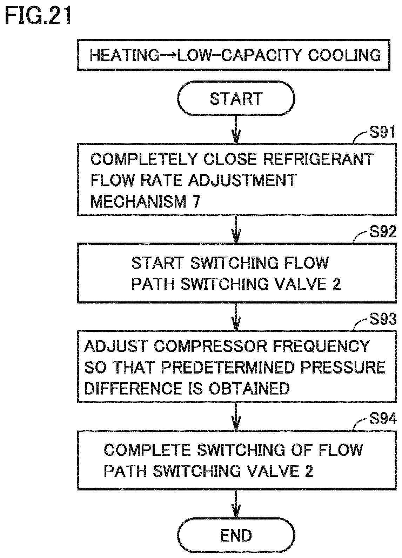

Fig. 21 is a flowchart for illustrating transition from heating operation to low-capacity cooling operation according to Embodiment 2. In step S91, initially controller 30 closes flow rate adjustment mechanism 7 into the state shown in Fig. 8. In step S92, subsequently controller 30 starts switching flow path switching valve 2. In step S93, controller 30 adjusts the frequency of compressor 1 so that an appropriate differential pressure required for switching is obtained, and the switching of flow path switching valve 2 is completed in step S94.

### <Transition between Cooling Operation and Low-Capacity Cooling Operation>

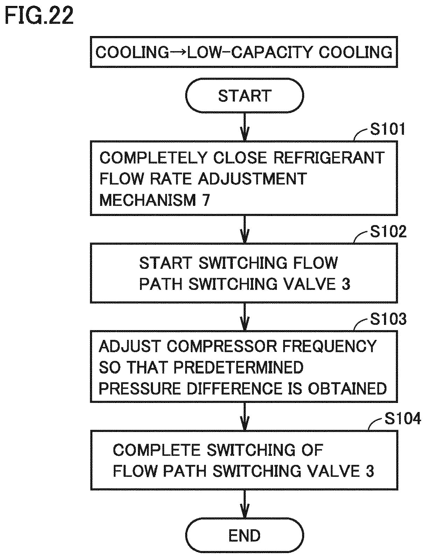

Fig. 22 is a flowchart for illustrating transition from cooling operation to low-capacity cooling operation according to Embodiment 2. In step S101, initially controller 30 closes flow rate adjustment mechanism 7 into the state shown in Fig. 7. In step S102, subsequently controller 30 starts switching flow path switching valve 3. In step S103, controller 30 adjusts the frequency of compressor 1 so that an appropriate differential pressure required for switching is obtained. In step S104, the switching of flow path switching valve 3 is completed.

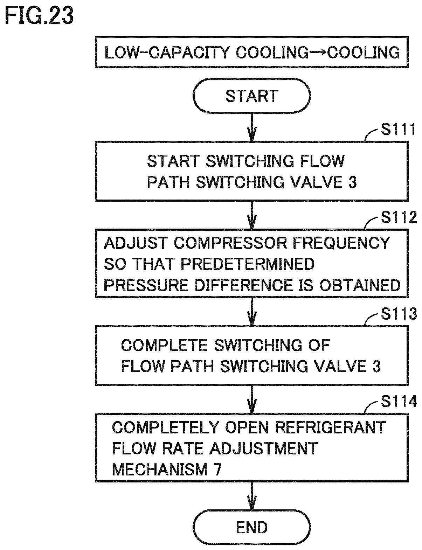

Fig. 23 is a flowchart for illustrating transition from low-capacity cooling operation to cooling operation. In step S111, initially controller 30 starts switching flow path switching valve 3. In step S112, controller 30 adjusts the frequency of compressor 1 so that an appropriate differential pressure required for switching is obtained, and switches flow path switching valve 3 into the state shown in Fig. 7. After the switching is completed in step S113, controller 30 opens flow rate adjustment mechanism 7 in step S114.

As seen from the foregoing, according to Embodiment 2, the operating frequency of compressor 1 is increased to keep an appropriate differential pressure when the differential pressure is decreased due to the bypass path, and therefore, switching of flow path switching valves 2, 3 can be completed successfully without problems.

### Embodiment 3

For Embodiment 3, the description of features identical to those of Embodiments 1 and 2 is not repeated and only distinguishing features of Embodiment 3 are described. According to Embodiments 1 and 2, flow path switching mechanism 20 is configured with flow path switching valves 2 and 3, a three-way valve is used as flow path switching valve 2, and a four-way valve is used as flow path switching valve 3. In connection with Embodiment 3, other features of the flow path switching mechanism are described.

### <Configuration of Refrigeration Cycle Apparatus 200>

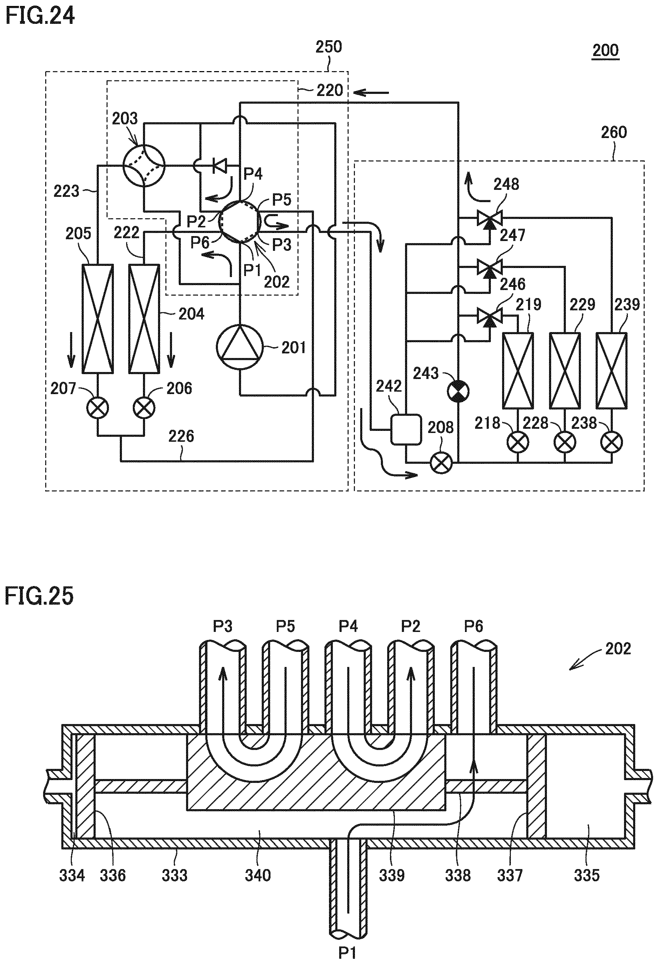

Fig. 24 is a refrigerant circuit diagram of a refrigeration cycle apparatus according to Embodiment 3. Fig. 24 shows a refrigerant circuit and flow of refrigerant during cooling operation. Refrigeration cycle apparatus 200 includes an outdoor unit 250 and an indoor unit 260. Outdoor unit 250 and indoor unit 260 are connected to each other by two pipes that allow refrigerant to flow therethrough.

Outdoor unit 250 includes a compressor 201, a first outdoor heat exchanger 204, a second outdoor heat exchanger 205, flow rate adjustment mechanisms 206, 207, and a flow path switching mechanism 220. Indoor unit 260 includes refrigerant expansion mechanisms 218, 228, 238, indoor heat exchangers 219, 229, 239, three-way valves 246, 247, 248, a gas-liquid separator 242, and flow rate adjustment valves 208, 243.

According to Embodiment 3, an example is illustrated where the flow path switching mechanism includes flow path switching valves 202, 203. Flow path switching valve 202 is a six-way valve, and flow path switching valve 203 is a four-way valve having one port to which a check valve is connected.

During cooling operation shown in Fig. 24, refrigerant discharged from compressor 201 flows through flow path switching mechanism 220, pipes 222, 223, first outdoor heat exchanger 204, second outdoor heat exchanger 205, flow rate adjustment mechanisms 206, 207, and pipe 226, and thereafter flows again through flow path switching mechanism 220. The refrigerant then flows through gas-liquid separator 242, refrigerant expansion mechanisms 218, 228, 238, indoor heat exchangers 219, 229, 239, and three-way valves 246, 247, 248, and thereafter flows again through flow path switching mechanism 220 to compressor 201.

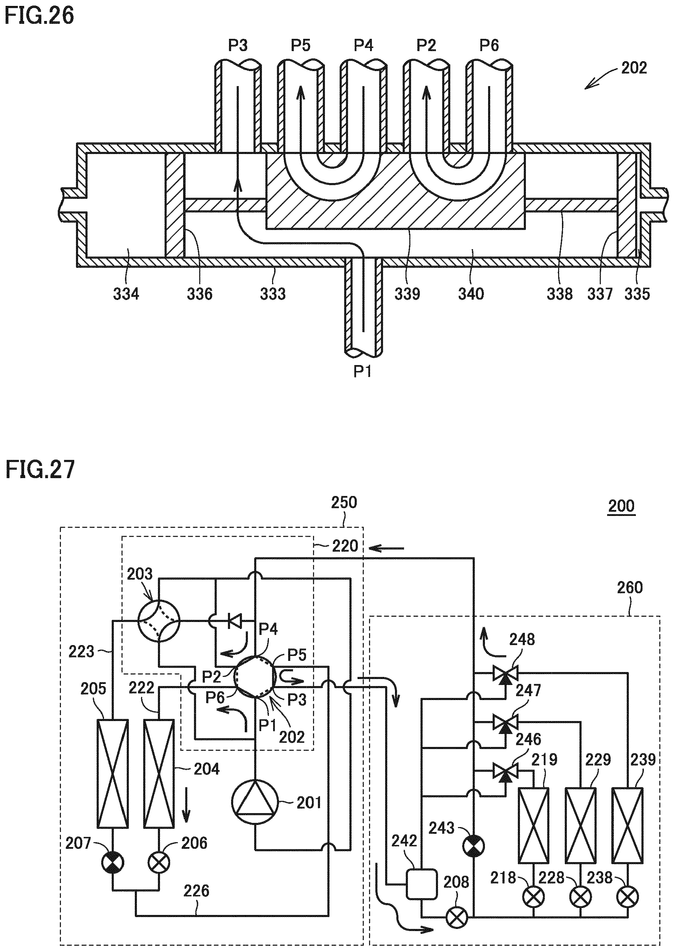

Although controller 30 in Fig. 1 is not shown in Fig. 24 in order not to complicate the drawing, a controller that controls flow path switching mechanism 220 is provided similarly. The same applies as well to Fig. 27 and subsequent drawings.

### <Configuration of Flow Path Switching Valve of Flow Path Switching Mechanism 220>

Among the valves forming flow path switching mechanism 220, flow path switching valve 203 is a four-way valve and its structure is identical to the structure described above in connection with Figs. 2 and 3. The description thereof is therefore not repeated herein. Among the valves forming flow path switching mechanism 220, flow path switching valve 202 is a six-way valve, and its valve body is driven with a similar differential pressure. The structure is now described briefly.

Fig. 25 shows a state of flow path switching valve 202 during cooling operation. Fig. 26 shows a state of flow path switching valve 202 during heating operation. In Figs. 25 and 26, ports P1 to P6 indicating destinations of connection correspond to those in Fig. 24.

Flow path switching valve 202 has port P1 connected to the discharge outlet of compressor 201, and port P2 connected to the suction inlet of compressor 201. The pressure of refrigerant flowing through port P1 is higher than the pressure of refrigerant flowing through port P2. This pressure difference is the differential pressure required for switching flow path switching valve 202.

Flow path switching valve 202 further includes a first pressure chamber 334 and a second pressure chamber 335 that are formed in a container 333. A switching unit (not shown in Figs. 25 and 26) similar to switching unit 145 in Fig. 2 causes high-pressure refrigerant similar to the one at port P1 to be introduced into any one of first pressure chamber 334 and second pressure chamber 335, and causes low-pressure refrigerant similar to the one at port P2 to be introduced into the other. Flow path switching valve 202 further includes a first partition 336 disposed in container 333 for separating first pressure chamber 334, and a second partition 337 disposed in container 333 for separating second pressure chamber 335. Flow path switching valve 202 further includes a coupling part 338 that couples first partition 336 and second partition 337 to each other in a valve body chamber 340 extending from first partition 336 to second partition 337. Flow path switching valve 302 further includes a valve body 339 disposed on coupling part 338.

The distance from first partition 336 to second partition 337 is a fixed length defined by coupling part 338 and valve body 339. The sum of the capacity of first pressure chamber 334 and the capacity of second pressure chamber 335 in container 333 is therefore constant and, as the capacity of one chamber increases, the capacity of the other chamber decreases complementarily. Valve body 339 is disposed in such a manner that valve body 339 is slidable together with first partition 336 and second partition 337.

During cooling operation, valve body 339 in flow path switching valve 202 is set in the state shown in Fig. 25. In this case, a flow path is formed to allow refrigerant to flow from port P1 to port P6, allow refrigerant to flow from port P5 to port P3, and allow refrigerant to flow from port P4 to port P2.

During heating operation, valve body 339 in flow path switching valve 202 is set in the state shown in Fig. 26. In this case, a flow path is formed to allow refrigerant to flow from port P1 to port P3, allow refrigerant to flow from port P4 to port P5, and allow refrigerant to flow from port P6 to port P2.

As seen from the foregoing, flow path switching valves 202, 203 in flow path switching mechanism 220 are switched and flow rate adjustment mechanism 207 is opened/closed to enable operation switching between cooling operation, low-capacity cooling operation when the outdoor air temperature is low, heating operation, and heating operation (weak) when the outdoor air temperature is high.

Fig. 24 shows flow of refrigerant during cooling operation in the refrigeration cycle apparatus according to Embodiment 3. In Fig. 24, flow path switching valve 202 is OFF state, flow path switching valve 203 is OFF state, and flow rate adjustment mechanism 207 is opened state.

Fig. 27 shows flow of refrigerant during low-capacity cooling operation in the refrigeration cycle apparatus according to Embodiment 3. In Fig. 27, flow path switching valve 202 is controlled to be OFF state, flow path switching valve 203 is controlled to be ON state, and flow rate adjustment mechanism 207 is controlled to be closed state. Accordingly, refrigerant does not flow through second outdoor heat exchanger 205 in the case shown in Fig. 27.

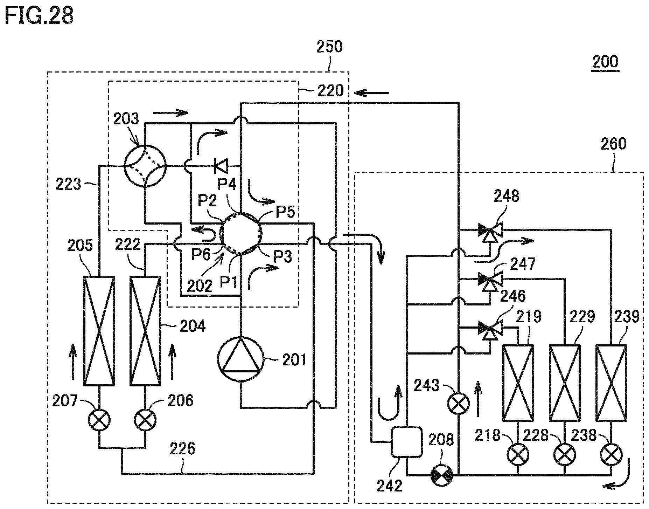

Fig. 28 shows flow of refrigerant during heating operation in the refrigeration cycle apparatus according to Embodiment 3. In Fig. 27, flow path switching valve 202 is controlled to be ON state, flow path switching valve 203 is controlled to be ON state, and flow rate adjustment mechanism 207 is controlled to be opened state.

During the heating operation shown in Fig. 28, refrigerant discharged from compressor 1 flows through gas-liquid separator 242, refrigerant expansion mechanisms 218, 228, 238, indoor heat exchangers 219, 229, 239, and three-way valves 246, 247, 248, and thereafter flows again through flow path switching mechanism 220. Then, the refrigerant flows through pipe 226, flow rate adjustment mechanisms 206, 207, first outdoor heat exchanger 204, second outdoor heat exchanger 205, and pipes 222, 223, and thereafter flows again through flow path switching mechanism 220 to compressor 201.

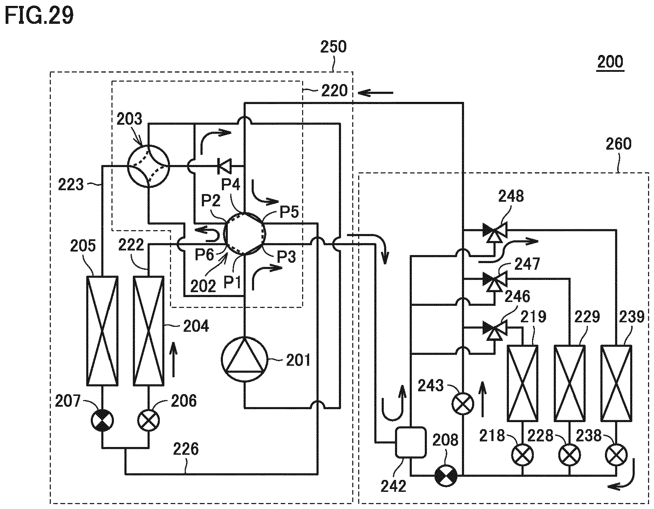

Fig. 29 shows flow of refrigerant during low-capacity heating operation in the refrigeration cycle apparatus according to Embodiment 3. In Fig. 29, flow path switching valve 202 is controlled to be ON state, flow path switching valve 203 is controlled to be OFF state, and flow rate adjustment mechanism 207 is controlled to be closed state. Accordingly, in the case shown in Fig. 29, refrigerant does not flow through second outdoor heat exchanger 205.

Although refrigerant is allowed to flow through all of indoor heat exchangers 219, 229, 239 in Figs. 24 and 27 to 29, some of refrigerant expansion mechanisms 218, 228, 238 may be closed to block refrigerant, depending on whether air conditioning of a room in which each indoor heat exchanger is disposed is requested or not. In this way, the number of operating indoor heat exchangers can be changed.

Although the check valve connected to the port of flow path switching valve 203 prevents backflow of refrigerant in Figs. 24 and 27 to 29, a four-way valve having a closed port as shown in Fig. 1 may also be used.

For switching between the four states shown in Figs. 24 and 27 to 29 as well, flow rate adjustment mechanism 207 is opened/closed appropriately in a similar manner to Embodiment 1, to thereby enable a differential pressure required for switching flow path switching mechanism 220 to be ensured.

Specifically, prior to switching of flow path switching valve 202 and flow path switching valve 203, flow rate adjustment mechanism 207 at the outlet of second outdoor heat exchanger 205 connected in series to flow path switching valve 203 is closed temporarily to ensure the differential pressure. Flow path switching valve 202 and flow path switching valve 203 in refrigeration cycle apparatus 200 have four different states as shown in Figs. 24 and 27 to 29. In the following, a procedure of state transition between the four different states is described briefly.
<A1: Switching from Fig. 24 (cooling operation) to Fig. 27 (cooling operation-weak)>
   (1) Flow rate adjustment mechanism 207 at the outlet of second outdoor heat exchanger 205 is closed.
   (2) After the switching of flow rate adjustment mechanism 207 is completed, flow path switching valve 203 is switched.
<A2: Switching from Fig. 27 (cooling operation-weak) to Fig. 24 (cooling operation)>
   (1) Flow path switching valve 203 is switched.
   (2) Flow rate adjustment mechanism 207 at the outlet of second outdoor heat exchanger 205 is opened.
<B1: Switching from Fig. 24 (cooling operation) to Fig. 29 (heating operation-weak)>
   (1) Flow rate adjustment mechanism 207 at the outlet of second outdoor heat exchanger 205 is closed.
   (2) After the switching of flow rate adjustment mechanism 207 is completed, flow path switching valve 202 is switched.
<B2: Switching from Fig. 29 (heating operation-weak) to Fig. 24 (cooling operation)>
   (1) Flow path switching valve 202 is switched.
   (2) Flow rate adjustment mechanism 207 at the outlet of second outdoor heat exchanger 205 is opened.
<C1: Switching from Fig. 24 (cooling operation) to Fig. 28 (heating operation)>
   (1) Flow rate adjustment mechanism 207 at the outlet of second outdoor heat exchanger 205 is closed.
   (2) After the switching of flow rate adjustment mechanism 207 is completed,
      (2-1) one of flow path switching valve 203 and flow path switching valve 202 is switched first, and
      (2-2) the other of flow path switching valve 203 and flow path switching valve 202 is switched next.
   (3) Flow rate adjustment mechanism 207 at the outlet of second outdoor heat exchanger 205 is opened.
<C2: Switching from Fig. 28 (heating operation) to Fig. 24 (cooling operation)>
   (1) Flow rate adjustment mechanism 207 at the outlet of second outdoor heat exchanger 205 is closed.
   (2) After the switching of flow rate adjustment mechanism 207 is completed,
      (2-1) one of flow path switching valve 203 and flow path switching valve 202 is switched first, and
      (2-2) the other of flow path switching valve 203 and flow path switching valve 202 is switched next.
   (3) Flow rate adjustment mechanism 207 at the outlet of the second outdoor heat exchanger 205 is opened.
<D1: Switching from Fig. 27 (cooling operation-weak) to Fig. 29 (heating operation-weak)>
   (1) One of flow path switching valve 203 and flow path switching valve 202 is switched first.
   (2) The other of flow path switching valve 203 and flow path switching valve 202 is switched next.
<D2: Switching from Fig. 29 (heating operation-weak) to Fig. 27 (cooling operation-weak)>
   (1) One of flow path switching valve 203 and flow path switching valve 202 is switched first.
   (2) The other of flow path switching valve 203 and flow path switching valve 202 is switched next.
<E1: Switching from Fig. 27 (cooling operation-weak) to Fig. 28 (heating operation)>
   (1) Flow path switching valve 202 is switched.
   (2) Flow rate adjustment mechanism 207 at the outlet of second outdoor heat exchanger 205 is opened.
<E2: Switching from Fig. 28 (heating operation) to Fig. 27 (cooling operation-weak)>
   (1) Flow rate adjustment mechanism 207 at the outlet of second outdoor heat exchanger 205 is closed.
   (2) After the switching of flow rate adjustment mechanism 207 is completed, flow path switching valve 202 is switched.
<F1: Switching from Fig. 29 (heating operation-weak) to Fig. 28 (heating operation)>
   (1) Flow path switching valve 203 is switched.
   (2) Flow rate adjustment mechanism 207 at the outlet of second outdoor heat exchanger 205 is opened.
<F2: Switching from Fig. 28 (heating operation) to Fig. 29 (heating operation-weak)>
   (1) Flow rate adjustment mechanism 207 at the outlet of second outdoor heat exchanger 205 is closed.
   (2) After the switching of flow rate adjustment mechanism 207 is completed, flow path switching valve 203 is switched.

As seen from the foregoing, according to Embodiment 3 as well, flow rate adjustment mechanism 207 at the outlet of second outdoor heat exchanger 205 connected in series with flow path switching valve 203 is closed before/after switching of flow path switching valve 203, to thereby close the bypass path extending from the high pressure part to the low pressure part through second outdoor heat exchanger 205, so that the differential pressure is ensured.

### Summary

In the following, Embodiments 1 to 3 are summarized with reference again to the drawings.

Refrigeration cycle apparatus 100 shown in Fig. 1 includes: compressor 1, first outdoor heat exchanger 4, and second outdoor heat exchanger 5 that are connected to refrigerant expansion mechanism 8 and indoor heat exchanger 9 and constitute a refrigerant circuit; and flow path switching mechanism 20 configured to switch a flow direction of refrigerant compressed by compressor 1 in the refrigerant circuit. Flow path switching mechanism 20 is connected to compressor 1, first outdoor heat exchanger 4, second outdoor heat exchanger 5, and indoor heat exchanger 9 in the refrigerant circuit. First outdoor heat exchanger 4 and second outdoor heat exchanger 5 are arranged to allow the refrigerant to flow in parallel in the refrigerant circuit. Refrigeration cycle apparatus 100 further includes flow rate adjustment mechanism 7 configured to adjust an amount of refrigerant flowing through second outdoor heat exchanger 5. When switching between a cooling operation and a heating operation, flow path switching mechanism 20 switches the flow direction of the refrigerant while flow rate adjustment mechanism 7 temporarily closes a refrigerant flow path to second outdoor heat exchanger 5.

Flow path switching mechanism 20 is configured to switch a flow path using, as a driving source, a differential pressure between a suction inlet and a discharge outlet of compressor 1. When flow rate adjustment mechanism 7 closes the refrigerant flow path to second outdoor heat exchanger 5, a flow path allowing the refrigerant to bypass indoor heat exchanger 9 and refrigerant expansion mechanism 8 and flow through second outdoor heat exchanger 5 is blocked.

As shown in Fig. 1, flow path switching mechanism 20 includes: flow path switching valve 3 that is a three-way valve connected between second outdoor heat exchanger 5, a suction inlet of compressor 1, and a discharge outlet of compressor 1; and flow path switching valve 2 that is a four-way valve connected between the first outdoor heat exchanger, the compressor, and the indoor heat exchanger.

As shown in Fig. 24, flow path switching mechanism 220 includes: flow path switching valve 203 that is a four-way valve connected between second outdoor heat exchanger 205, a suction inlet of compressor 201, and a discharge outlet of compressor 201; and flow path switching valve 202 that is a six-way valve connected at least to first outdoor heat exchanger 204, compressor 201, and indoor heat exchanger 219.

Flow rate adjustment mechanism 7, 207 has an electronic expansion valve.

Flow path switching mechanism 20 is configured to switch a flow path using, as a driving source, a differential pressure between a suction inlet and a discharge outlet of compressor 1. When switching between the cooling operation and the heating operation, refrigeration cycle apparatus 100 temporarily changes an operating frequency of compressor 1 to maintain the differential pressure required for switching flow path switching mechanism 20.

A refrigeration cycle apparatus according to another aspect of the present disclosure illustrated in connection with Embodiment 2 includes: compressor 1, first outdoor heat exchanger 4, and second outdoor heat exchanger 5 that are connected to refrigerant expansion mechanism 8 and indoor heat exchanger 9 and constitute a refrigerant circuit; and flow path switching mechanism 20 configured to switch a flow direction of refrigerant compressed by compressor 1 in the refrigerant circuit. Flow path switching mechanism 20 is connected to compressor 1, first outdoor heat exchanger 4, second outdoor heat exchanger 5, and indoor heat exchanger 9 in the refrigerant circuit. Flow path switching mechanism 20 is configured to switch a flow path using, as a driving source, a differential pressure between a suction inlet and a discharge outlet of compressor 1. When switching between a cooling operation and a heating operation, refrigeration cycle apparatus 100 temporarily changes an operating frequency of compressor 1 to maintain the differential pressure required for switching flow path switching mechanism 20.

It should be construed that the embodiments disclosed herein are given by way of illustration in all respects, not by way of limitation. It is intended that the scope of the present invention is defined by claims, not by the description above, and encompasses all modifications and variations equivalent in meaning and scope to the claims.

### REFERENCE SIGNS LIST

1, 201 compressor; 2, 3, 202, 203, 302 flow path switching valve; 2a, 2b, 2c, 2d, 3a, 3b, 3c, 3d flow path; 4, 204 first outdoor heat exchanger; 5, 205 second outdoor heat exchanger; 6, 7, 206, 207 flow rate adjustment mechanism; 8, 218, 228, 238 refrigerant expansion mechanism; 9, 219, 229, 239 indoor heat exchanger; 10, 11 pressure sensor; 15 first fan; 16 second fan; 19 fan; 20, 220 flow path switching mechanism; 21, 22, 23, 24, 25, 26, 27, 28, 29, 222, 223, 226 pipe; 30 controller; 50, 250 outdoor unit; 60, 260 indoor unit; 100, 200 refrigeration cycle apparatus; 131 high-pressure connection pipe; 132 low-pressure connection pipe; 133 first container; 134, 334 first pressure chamber; 135, 335 second pressure chamber; 136, 336 first partition; 137, 337 second partition; 138, 338 coupling part; 139, 339 valve body; 140, 340 valve body chamber; 145 pressure switching unit; 146 second container; 147a first communication flow path; 147b second communication flow path; 148 second valve body; 149 drive unit; 150 electromagnet; 151 plunger; 152 spring; 153 coupling rod; 208, 243 flow rate adjustment valve; 242 gas-liquid separator; 246, 247, 248 three-way valve; P1, P2, P3, P4, P5, P6 port

## Claims

1. A refrigeration cycle apparatus, comprising:
a compressor, a first outdoor heat exchanger, and a second outdoor heat exchanger that are connected to a refrigerant expansion mechanism and an indoor heat exchanger and constitute a refrigerant circuit;
a flow path switching mechanism configured to switch a flow direction of refrigerant compressed by the compressor in the refrigerant circuit, the flow path switching mechanism being connected to the compressor, the first outdoor heat exchanger, the second outdoor heat exchanger, and the indoor heat exchanger in the refrigerant circuit,
the first outdoor heat exchanger and the second outdoor heat exchanger being arranged to allow the refrigerant to flow in parallel in the refrigerant circuit; and
a flow rate adjustment mechanism configured to adjust an amount of refrigerant flowing through the second outdoor heat exchanger, wherein
when switching between a cooling operation and a heating operation, the flow path switching mechanism switches the flow direction of the refrigerant while the flow rate adjustment mechanism temporarily closes a refrigerant flow path to the second outdoor heat exchanger.

2. The refrigeration cycle apparatus according to claim 1, wherein
the flow path switching mechanism is configured to switch a flow path using, as a driving source, a differential pressure between a suction inlet and a discharge outlet of the compressor, and
when the flow rate adjustment mechanism closes the refrigerant flow path to the second outdoor heat exchanger, a flow path allowing the refrigerant to bypass the indoor heat exchanger and the refrigerant expansion mechanism and flow through the second outdoor heat exchanger is blocked.

3. The refrigeration cycle apparatus according to claim 1 or 2, wherein
the flow path switching mechanism includes:
a three-way valve connected between the second outdoor heat exchanger, a suction inlet of the compressor, and a discharge outlet of the compressor; and
a four-way valve connected between the first outdoor heat exchanger, the compressor, and the indoor heat exchanger.

4. The refrigeration cycle apparatus according to claim 1 or 2, wherein
the flow path switching mechanism includes:
a four-way valve connected between the second outdoor heat exchanger, a suction inlet of the compressor, and a discharge outlet of the compressor; and
a six-way valve connected at least to the first outdoor heat exchanger, the compressor, and the indoor heat exchanger.

5. The refrigeration cycle apparatus according to any one of claims 1 to 4, wherein the flow rate adjustment mechanism has an electronic expansion valve.

6. The refrigeration cycle apparatus according to claim 1, wherein
the flow path switching mechanism is configured to switch a flow path using, as a driving source, a differential pressure between a suction inlet and a discharge outlet of the compressor, and
when switching between the cooling operation and the heating operation, an operating frequency of the compressor is changed temporarily to maintain the differential pressure required for switching the flow path switching mechanism.

7. A refrigeration cycle apparatus comprising:
a compressor, a first outdoor heat exchanger, and a second outdoor heat exchanger that are connected to a refrigerant expansion mechanism and an indoor heat exchanger and constitute a refrigerant circuit; and
a flow path switching mechanism configured to switch a flow direction of refrigerant compressed by the compressor in the refrigerant circuit, the flow path switching mechanism being connected to the compressor, the first outdoor heat exchanger, the second outdoor heat exchanger, and the indoor heat exchanger in the refrigerant circuit, wherein
the flow path switching mechanism is configured to switch a flow path using, as a driving source, a differential pressure between a suction inlet and a discharge outlet of the compressor, and
when switching between a cooling operation and a heating operation, an operating frequency of the compressor is changed temporarily to maintain the differential pressure required for switching the flow path switching mechanism.
